# EUROPEAN PATENT APPLICATION

(11) **EP 1 921 557 A1**
(43) Date of publication of application: **14.05.2008**
(21) Application number: 06023535.5
(22) Date of filing: 13.11.2006
(51) Int. Cl.: G06F 21/20

(54) **Certificate handling method and system for ensuring secure identification of identities of multiple electronic devices**

(71) Applicant: Jaycrypto Limited, Hornchurch RM11 2QB (GB)
(72) Inventor: The designation of the inventor has not yet been filed
(74) Representative: Peterreins, Frank

(57) **Abstract**

The present invention relates to a certificate handling method and system for ensuring secure identification of identities of multiple electronic devices and especially to a method and a system for autonomously creating, transferring, verifying, issuing and status checking (e.g. revocation status) of digital certificates for electronic communication. The present invention provides a certificate handling method, wherein the electronic devices can mutually authenticate each others identity without the use of a certificate authority and the identities of a first electronic device and a second electronic device are mutually authenticated using a personal area network to establish a trust relationship between the first electronic device and the second electronic device.

## Description

The present invention relates to a certificate handling method and system for ensuring secure identification of identities of multiple electronic devices and especially to a method and a system for autonomously creating, transferring, verifying, issuing and status checking (e.g. revocation status) of digital certificates for electronic communication.

### Technical Background

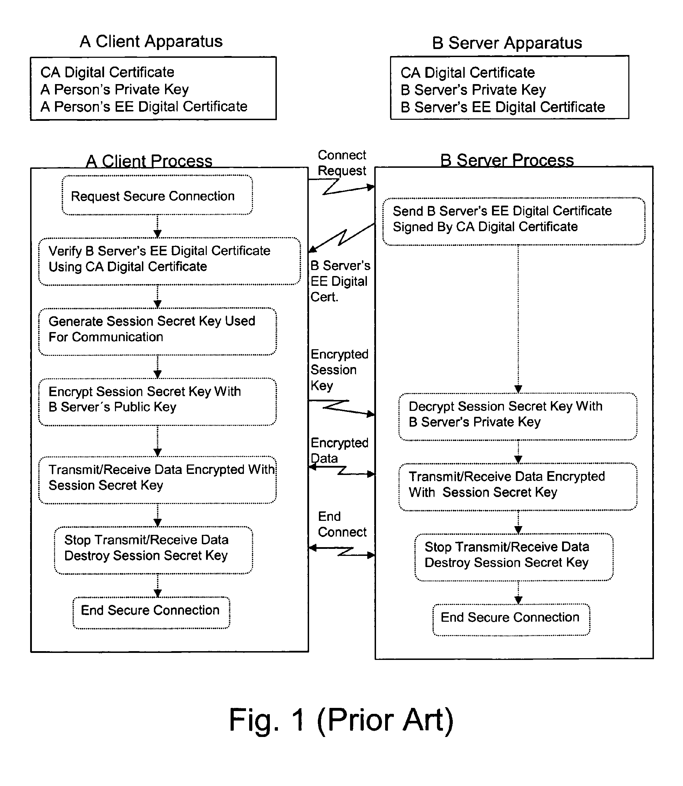

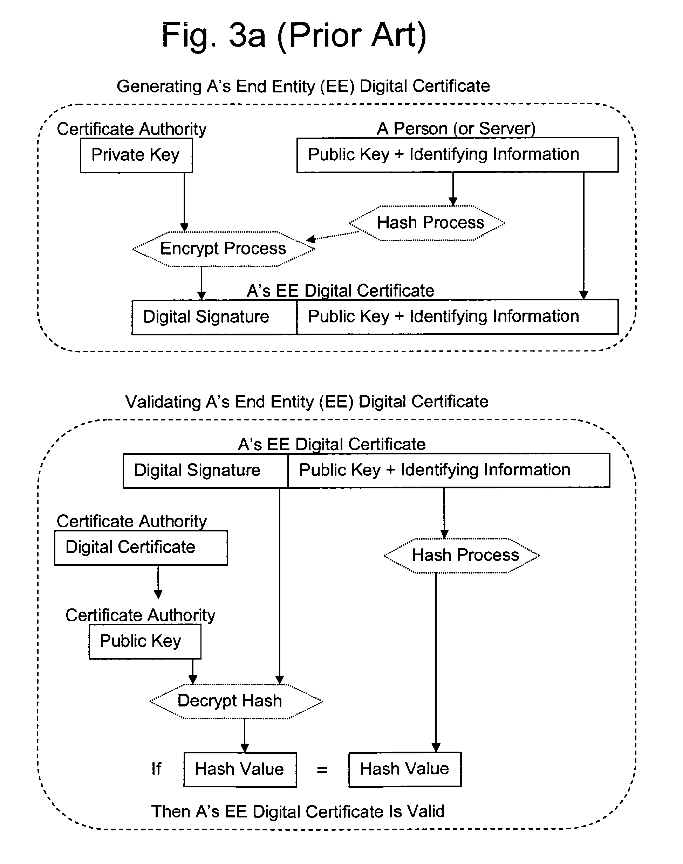

As shown in Fig. 1, it is common practice to use web server digital certificates to authenticate the identity of a web server to visiting browsers. A client web browser accesses the web server's digital certificate when entering a secure session. The web server's digital certificate is issued by a certificate authority (CA), the digital certificate containing the web server's public key, is used to authenticate the identity of the web server (as shown in Fig. 3a). The certificate provides the client web browser with the web server's public key, so that the client web browser can encrypt and send a (secret) session key to the web server, the (secret) session key is then used to encrypt data transmitted between the client web browser and the web server. Since only the web server has the private key to decrypt the session key supplied by the client web browser, the (secret) session key is only known to the client web browser and the web server. Any information transmitted between the client web browser and the web server remains secure since the information is encrypted with the exchanged (secret) session key. The web server certificate is issued by a certificate authority (CA). Most client web browsers are published and distributed with a number of CA's digital certificates, containing the CA's public key, installed as root certificates, so that the client web browser will recognize the CA's signature as the issuer of the web server's certificate and trust the certificate.

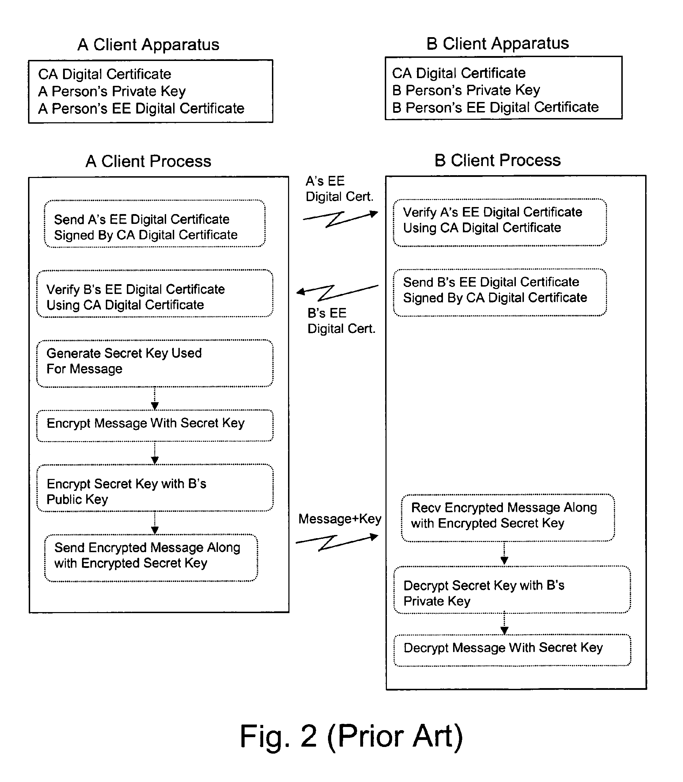

As shown in Fig. 2, it is also common practice to use personal digital certificates to authenticate the identity of a person as the sender or recipient of a digitally signed or encrypted email message. The holders of the personal digital certificates would exchange their digital certificates by email or any online messaging system or even download from a website. The holders of the personal digital certificates may even exchange their digital certificates offline using storage media, such as CDs or detachable disk drives. The sender and recipient's personal digital certificate is issued by a certificate authority (CA), the digital certificate containing a person's public key and identifying information, is used to authenticate the identity of a person (as shown in Fig. 3a). The recipient's digital certificate, which contains a public key, is then used by a messaging software application such as email or instant messaging to communicate with a recipient who already has the sender's digital certificate. The email or instant messaging application generates a secret key to encrypt the message data and uses the recipient's public key to encrypt the secret key, and then sends the message data encrypted with the secret key along with the encrypted secret key. Another way an instant messaging application may use the recipient's public key is to encrypt and transmit a secret key generated for establishing a secure session, thereafter using the secret key to encrypt information transmitted between the sender and recipient. The sender and recipient's personal digital certificate is issued by a certificate authority (CA), the digital certificate containing a person's public key and identifying information, is used to authenticate the identity of a person (as shown in Fig. 3a). Most email and a few instant messaging software applications are published and distributed with a number of CA's digital certificates, containing the CA's public key, installed as root certificates, so that the email and instant messaging software application will recognize the CA's signature as the issuer of the personal digital certificate and trust the certificate.

There are also instances where digital certificates are used to authenticate the identity of persons, computing or networking equipment in order to gain access to servers for different purposes. In such cases, the use of digital certificates would be similar to that described in the first paragraph of the background art, where client web browsers access a web server, except that there would be a possibility or need to mutually authenticate the server as well as the person or equipment requesting access.

As shown in Fig. 3a, generally, in order to obtain a digital certificate for a web server (and also for computing or networking server equipment), the owner (Requestor) of the website (or equipment) will submit a certificate signing request (CSR), or its equivalent, containing the public key of the web server (or equipment) along with other relevant identifying information to a certificate authority (CA). When the CA is satisfied with the authenticity of the identity of the Requestor, the CA will issue a digital certificate containing the public key and relevant identifying information of the web server (or equipment) and sign the certificate using the CA's private key.

As also shown in Fig. 3a, generally, in order to obtain a personal digital certificate, a person (Requestor) will submit a certificate signing request (CSR), or its equivalent, containing the person's public key along with other relevant identifying information to a certificate authority (CA). When the CA is satisfied with the authenticity of the identity of the Requestor, the CA will issue a personal digital certificate containing the person's public key and relevant identifying information and sign the certificate using the CA's private key.

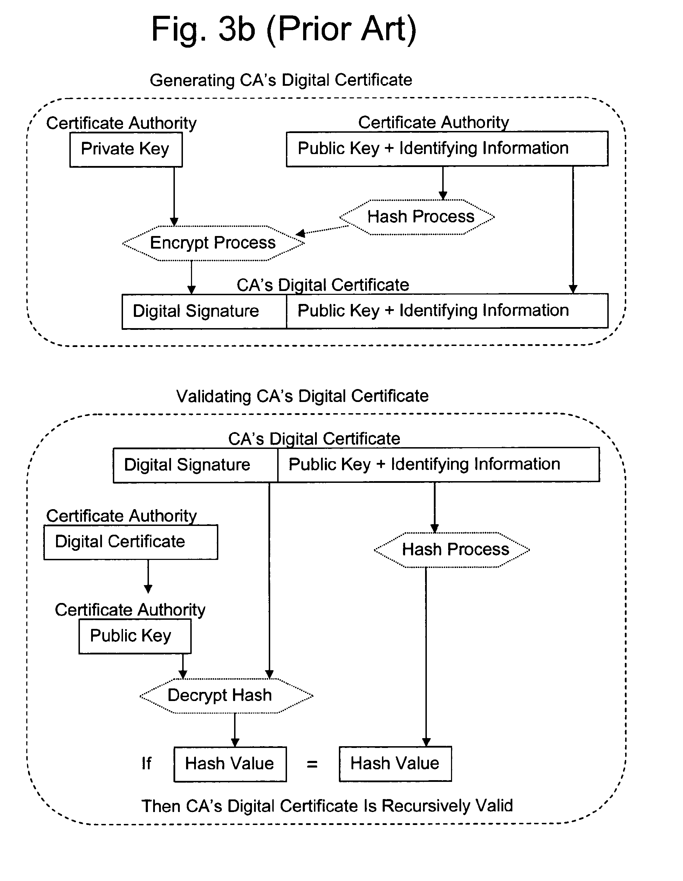

As shown in Fig. 3b, a certificate authority will issue and sign its own digital certificate. This self-signed CA digital certificate serves a restricted function to act solely for use in validating other digital certificates which have been signed by CA's corresponding private key. Validating the self signed CA digital certificate is not usually done as shown in Fig. 3b, since that would obviously imply a recursive self validation, but the self-signed CA digital certificate is installed as a trusted root digital certificate in published and distributed software applications.

Another known method which enables persons to autonomously mutually authenticate each other's identity without the need for a CA to act as the middle man for creating, transferring, verifying and issuing digital certificates is based on the PGP certificate format. The PGP certificate format allows a person to create their own digital certificate, so there is no need for a CA to be the issuer. A PGP digital certificate can contain multiple signatures since several people may sign the certificate to attest each signer's assurance that the public key definitely belongs to the specified owner. More uniquely, a PGP digital certificate contains several labels, each being a different means for identifying the owner of the public key (owner's name and business email account, owner's nickname and personal email account, owner's photograph), all of which are considered as different identities of the same person kept within the same digital certificate. The people who sign each of those identity labels may differ, people's signatures only verify that one or more of the labels (name and business email, or nickname and personal email, or photograph) corresponds to the public key, without regard to the authenticity of all the other labels.

Many digital certificates also contain the owner's contact records (such as parts of the Distinguished Name field in an X.509 certificate may include a phone number, an email address or even a mailing address). In the case where such contact records are not included in the digital certificate, the apparatus keeps the digital certificate linked to the identified certificate owner's contact records maintained in the apparatus database or an address book. The contact records may include but are not limited to the certificate owner's mobile and fixed phone numbers, email address, and URL (in the case of the certificate owner being an organization or an individual affiliated with an organization).

### Summary of the Invention

In view of the above mentioned prior art, the present invention has the object to provide an improved authentication method and a corresponding system.

The above object is achieved according to the present invention by the certificate handling method of claim 1 and the certificate handling system of claim 12. Preferred embodiments are described in the dependent claims.

The present invention provides methods and systems for enabling web servers (and also for computing or networking equipment) to autonomously mutually authenticate each other's identity without the need for a CA to act as the middle man for creating, transferring, verifying and issuing personal digital certificates. The present invention also provides methods and systems for enabling persons to autonomously mutually authenticate each other's identity without the need for a CA to act as the middle man for creating, transferring, verifying and issuing personal digital certificates.

The aspects, features and advantages of the present invention are better understood according to the following description with reference to the accompanying drawings. The following are preferred embodiments of the present invention. It should be apparent to those skilled in the art that the description is illustrative only and the invention can be embodied in a wide variety of forms, some of which may be quite different from the disclosed embodiments. All the features disclosed in this description may be replaced by alternative features serving the same purpose, and equivalent or similar purpose, unless expressly stated otherwise. Therefore numerous other embodiments or modifications are contemplated as falling within the scope of the present invention as defined in the claims. Use of absolute terms, such as "will not", "will", "shall", "shall not", "must" and "must not" are not meant to limit the present invention as the embodiments disclosed herein are merely exemplary.

The following description will be presented using terminology commonly employed by those skilled in the art to convey the substance of their work to others skilled in the art. Also, the following description will be presented in terms of operations performed through the execution of programming instructions. As well understood by those skilled in the art, these operations often take the form of electrical, magnetic, optical or wireless signals capable of being stored, transferred, combined, and otherwise manipulated through, for instance, electrical components.

The present invention provides a certificate handling method for ensuring secure identification of identities of multiple electronic devices, wherein the electronic devices can mutually authenticate each other's identity without the use of a certificate authority, and wherein the identities of a first electronic device and a second electronic device are mutually authenticated using a personal area network to establish a trust relationship between the first electronic device and the second electronic device. An electronic device, which is also called apparatus throughout this description, can e.g. be a computer, a PDA, an equipment part or some other device used for communication.

Such a certificate handling method may include that the first electronic device, which has established trust relationships with the second electronic device and with a third electronic device using one or more personal area networks, can forward information identifying the second electronic device to the third electronic device and information identifying the third electronic device to the second electronic device, so that a trust relationship is established between the second electronic device and the third electronic device even if the second electronic device and the third electronic device have not directly established a trust relationship between each other before. The forwarding of information identifying an electronic device can be done over any kind of network.

A certificate handling method may include that a certificate of a first electronic device is signed by a second electronic device and stored in a certificate storage and retrieval part of the second electronic device when the second electronic device authenticates the identity of the first electronic device. In more detail, the CA Cert. of the first electronic device is signed by the second electronic device.

Next a certificate handling method may include that multiple certificates of one electronic device are stored separately in another electronic device if the certificates are signed by different electronic devices. That means, if the first electronic device has e.g. authenticated the second electronic device and a third electronic device which has also authenticated the second electronic device and has forwarded this authentication to the first electronic device, then the first electronic device will store an EE Cert. and a CA Cert. signed by the second electronic device and an EE Cert. and a CA Cert. signed by the third electronic device of the second electronic device separately. This working principle offers the possibility to easily and separately check which devices have authenticated a certain device. The degree of flexibility is also improved in that certificates signed by different devices can be handled individually. Additionally, a certificate handling method may include that one certificate must not be signed by more than one electronic device.

Furthermore, a certificate handling method may include that end entity certificates (EE Cert.) and certificate authority certificates (CA Cert.) are used to authenticate electronic devices, wherein the certificate authority certificate of a first electronic device is signed by the second electronic device when the second electronic device authenticates the identity of the first electronic device.

A certificate handling method of the present invention may include that the certificate handling method can be used together with conventional certificate handling methods. Such compatibility allows for integration into established systems. A certificate handling method of the present invention may also include that the first electronic device can authenticate the identity of a fourth electronic device using an offline verification method.

According to the present invention, a personal area network can be chosen from the groups of wireless or wired personal area networks including bluetooth, infrared, RS-232, USB, FireWire. Data between electronic devices having established a trust relationship can be transmitted over networks chosen from the groups of wireless or wired networks including wireless LAN, WiMAX, cellular based networks, LAN, WAN, telephony based networks, bluetooth, infrared, RS-232, USB, FireWire.

Additionally, a certificate handling method according to the present invention may include that an electronic device can check a status of another electronic device either by directly issuing a status check request to that electronic device or issuing the status check request via other electronic devices. The second alternative means that e.g. the first device asks the second device to check the status of a third device. The second device will then forward the result of the status check to the first device.

The present invention also provides a certificate handling system for ensuring secure identification of identities of multiple electronic devices being connected by one or more networks, wherein a certificate handling method as described above is used.

Each electronic device may be provided with a communication part for interfacing to a network and a certificate handling part. A certificate handling part can comprises a certificate creation part, a certificate issuing/signing part, a certificate storage and retrieval part, a certificate verification part and a send/receive certificate part.

This is a description of how the invention applies to autonomous identification, processing and issuance of digital certificates. This is only one of the many potential systems, process flows and applications for the invention.

While the invention applies to autonomous use of digital certificates, it is also interoperable with conventional use of digital certificates, where a CA is required to act as a middle man who verifies the authenticity of the identity of the holder of the digital certificate.

### Short Description of the Drawings

The invention will be understood more easily by referring, by way of example, to the accompanying drawings, in which
- Fig. 1: is a schematic diagram showing a known way of authentication of a server to a client.
- Fig. 2: is a schematic diagram showing a known way of authentication of the identity of a person as a sender or recipient.
- Figs. 3a and 3b: are schematic diagrams showing known ways of generating and validating certificates.
- Fig. 4: is a schematic diagram showing certain parts of an electronic device according to the invention.
- Figs. 5a and 5b: are schematic diagrams showing the structure of a certificate creation part as well as a certificate storage and retrieval part.
- Figs. 6a and 6b: are schematic diagrams showing the exchange of certificates between a first electronic device and a second electronic device.
- Figs. 7a and 7b: are schematic diagrams showing the exchange of certificates between the first electronic device and the second electronic device.
- Figs. 8a and 8b: are schematic diagrams showing the exchange of certificates between the first electronic device and a third electronic device.
- Figs. 9a and 9b: are schematic diagrams showing the exchange of certificates between the first electronic device and a fourth electronic device.
- Figs. 10a and 10b: are schematic diagrams showing another form of authentication of the fourth electronic device to the first electronic device.
- Figs. 11a and 11b: are schematic diagrams showing the exchange of certificates between the first electronic device and the second electronic device.
- Figs.: are schematic diagrams showing a status check process.
- Figs. 12a and 12b: 13a and 13b are schematic diagrams showing another status check process.
- Fig. 14: is a schematic diagram showing interoperation with known methods.

### Detailed Description of Preferred Embodiments

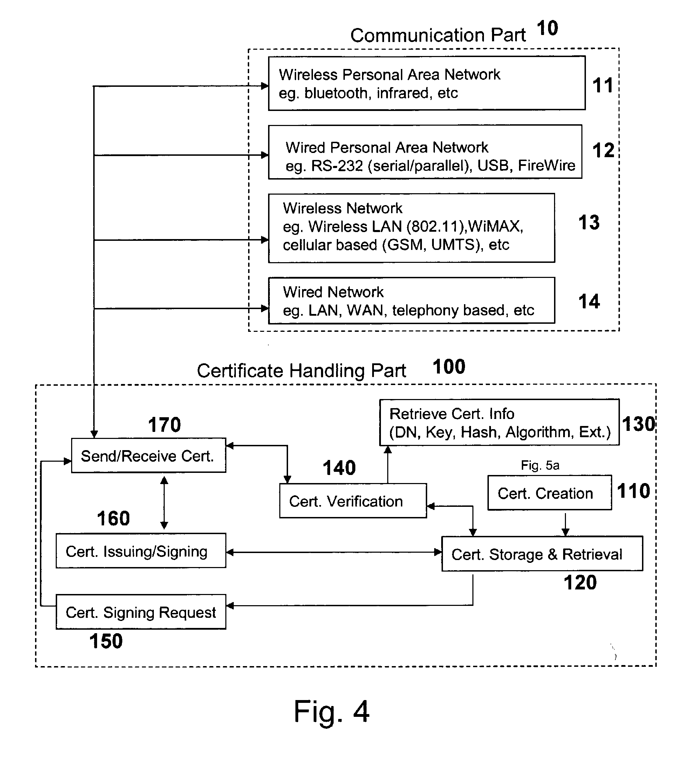

Fig. 4 illustrates a diagram of an apparatus in accordance with an embodiment of the present invention. An electronic apparatus or device for the purposes of exchanging digital certificates includes a communication part 10 and a certificate handling part 100.

As shown in Fig. 4, the communication part 10 of an apparatus, in accordance with an embodiment of the present invention, may include different media and methods. One of the communication media includes wireless personal area network 11, which would include protocols like infrared or bluetooth (IEEE 802.15), defined as personal due to their general limitation on distance for wireless transmission which ensures that the apparatuses are operated to connect within each others proximate physical presence. Another communication media is wired personal area network 12, which would include serial and parallel cables or USB or FireWire (IEEE 1394), defined as personal due to the limitation on distance for wired transmission which ensures that the apparatuses are operated to connect within each others proximate physical presence. Another communication media is the wireless network 13, which would include wireless LAN (IEEE 802.11 or Wi-Fi) WiMax (IEEE 802.16) or cellular (GSM, UMTS) networks, defined as wireless networks due to the very nature of the transmission using different protocols over different radio frequencies within the spectrum allocated. The wired network 14 is a further communication media for the apparatus, which would include LAN (IEEE 802.3 or ethernet, token ring), WAN (internet, intranet, x.25) or telephony networks. The communication part 10 of an apparatus may include one or more of the mentioned communication media.

As shown in Fig. 4, the certificate handling part 100 of an apparatus, in accordance with an embodiment of the present invention, may include several modules. The module for sending and receiving digital certificates 170 is the interface for the certificate handling part 100 with the communication part 10 of the apparatus. All digital certificates that are stored, sent or received are processed by the certificate verification module 140. Digital certificates that are signed or issued by the apparatus are sent out or stored upon receipt. A certificate signing request module 150 is shown as to illustrate a conventional apparatus performing digital certificate exchange, however the present invention does not require such a module due to the methods described herein for autonomous exchange of digital certificates. All digital certificates are verified before retrieval or storage or accessing certificate information (such as Distinguished Name fields of the certificate holder and issuer, Public Key fields, Hash or fingerprint, or Algorithms for which the digital certificate may be used, etc.). Digital certificates are received or are created and then stored in the storage and retrieval module 120. The certificate handling part 100 may also include a retrieve certificate information module 130 and a certificate issuing and signing module 160.

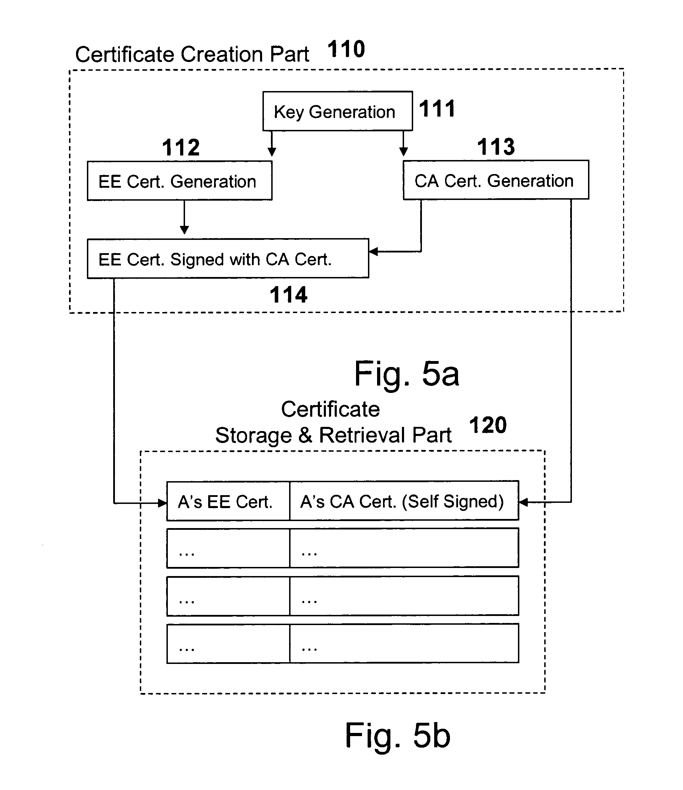

Fig. 5a illustrates in the form of a diagram the certificate creation module 110 within the certificate handling part 100. Key generation 111 is done according to known algorithms to obtain a public and private key pair. The public key is then used, in combination with relevant identifying information obtained as inputs from the user of the apparatus and information necessary to create a valid digital certificate, to generate an end entity certificate 112 (also called an EE digital certificate or EE Cert) and a certificate authority certificate 113 (also called a CA digital certificate or CA Cert). The EE Cert is then digitally signed 114 by the CA Cert which acts as the issuer. The CA Cert is self signed.

Fig. 5b illustrates in the form of a diagram, how the EE Cert and corresponding CA Cert are stored in relation to each other as belonging to the apparatus A. The EE Cert and CA Cert are stored in a certificate storage and retrieval module 120 within the certificate handling part.

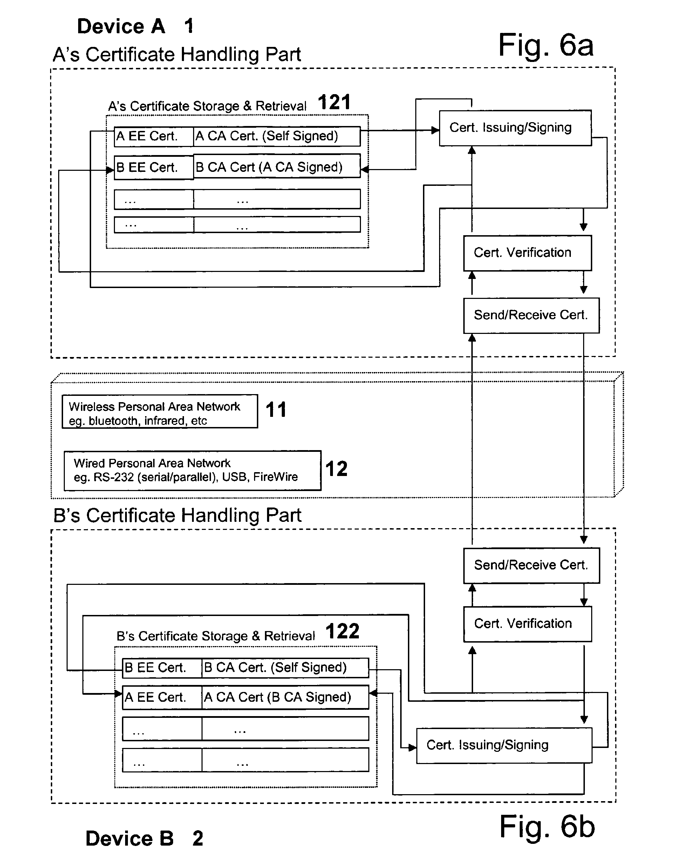

Figs. 6a and Fig 6b illustrate in the form of a diagram the exchange of digital certificates between apparatus A 1 and apparatus B 2, while representing the communication part of each apparatus as a single entity even though the communication parts are physically distinct on each apparatus. The exchange of digital certificates occurs via a wireless personal area network or a wired personal area network. In this instance, apparatus A 1 and B 2 are devices linked for the purpose of digital certificate exchange while within each others proximate physical presence. This proximity allows apparatus A 1 and B 2 to mutually and autonomously authenticate and verify each others digital certificates.

Fig. 6a shows how the EE Cert and CA Cert of apparatus A 1 are retrieved from the certificate storage and retrieval module 121 and go through the certificate verification module (which verifies that the EE Cert is issued by the corresponding CA Cert). The EE Cert and CA Cert of apparatus A 1 (A EE Cert and A CA Cert) are then sent through the personal area network module (wireless or wired) of apparatus A 1 to be received by the personal area network module (wireless or wired) of apparatus B 2.

When, as illustrated in Fig. 6b, apparatus B 2 receives the A EE Cert and A CA Cert from apparatus A 1, the digital certificates are verified as belonging to apparatus A 1. Once verified, apparatus A EE Cert is stored within the storage and retrieval module of apparatus B 2. A CA Cert is then signed by B CA Cert before being stored within the storage and retrieval module 122 of apparatus B 2.

Fig. 6b shows how the B EE Cert and B CA Cert of apparatus B 2 is retrieved from the certificate storage and retrieval module 122 and go through the certificate verification module (which verfies that the B EE Cert is issued by the corresponding B CA Cert). The B EE Cert and B CA Cert of apparatus B 2 are then sent through the personal area network module (wireless or wired) of apparatus B 2 to be received by the personal area network module (wireless or wired) of apparatus A 1.

When, as illustrated in Fig. 6a, apparatus A 1 receives the B EE Cert and B CA Cert from apparatus B 2, the digital certificates are verified as belonging to apparatus B 2. Once verified, B EE Cert is stored within the storage and retrieval module 121 of apparatus A1. B CA Cert is then signed by A CA Cert before being stored within the storage and retrieval module 121 of apparatus A 1.

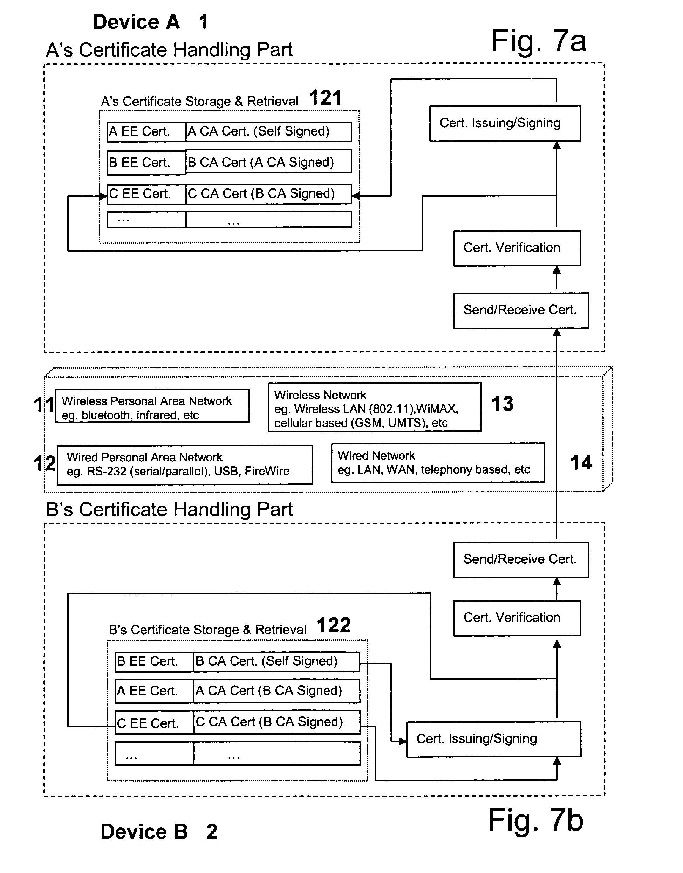

Fig. 7a and Fig. 7b illustrate in the form of a diagram, how apparatus B 2 retrieves the internally stored digital certificate of apparatus C (which was received previously directly from apparatus C as outlined in Figs. 6a and 6b) to be forwarded on to apparatus A 1. Apparatus B 2 and apparatus A 1 already have established a prior trust relationship due to their physical proximity during a previous encounter. The establishment of a prior trust relationship is indicated by their mutual storage of each others EE Cert and CA Cert, while having the trusted apparatus' CA Cert signed by the trusting apparatus' CA Cert (B CA Cert signed by A CA Cert and vice versa). In this instance, any forwarding of digital certificates between apparatus A 1 and apparatus B 2, through their communication part, can safely and securely be done without concern for their physical proximity and so occur over any type of network connection 11, 12, 13, 14 (wireless or wired, personal area or otherwise).

Fig. 7b shows how the C EE Cert and C CA Cert of apparatus C is retrieved from the storage and retrieval module 122 of apparatus B 2, goes through the certificate verification module (which verifies that C EE Cert is issued by the corresponding C CA Cert, and also that C CA Cert is issued by B CA Cert). The C EE Cert and C CA Cert of apparatus C are then sent through the communication part 102 of apparatus B 2 to be received by the communication part 101 of apparatus A 1.

When, as illustrated in Fig. 7a, apparatus A 1 receives the C EE Cert and C CA Cert from apparatus B 2, the digital certificates are verified as belonging to apparatus C as issued or signed by apparatus B 2. Once verified, C EE Cert is stored within the storage and retrieval module 121 of apparatus A 1. C CA Cert signed by B CA Cert is also stored within the storage and retrieval module 121 of apparatus A 1.

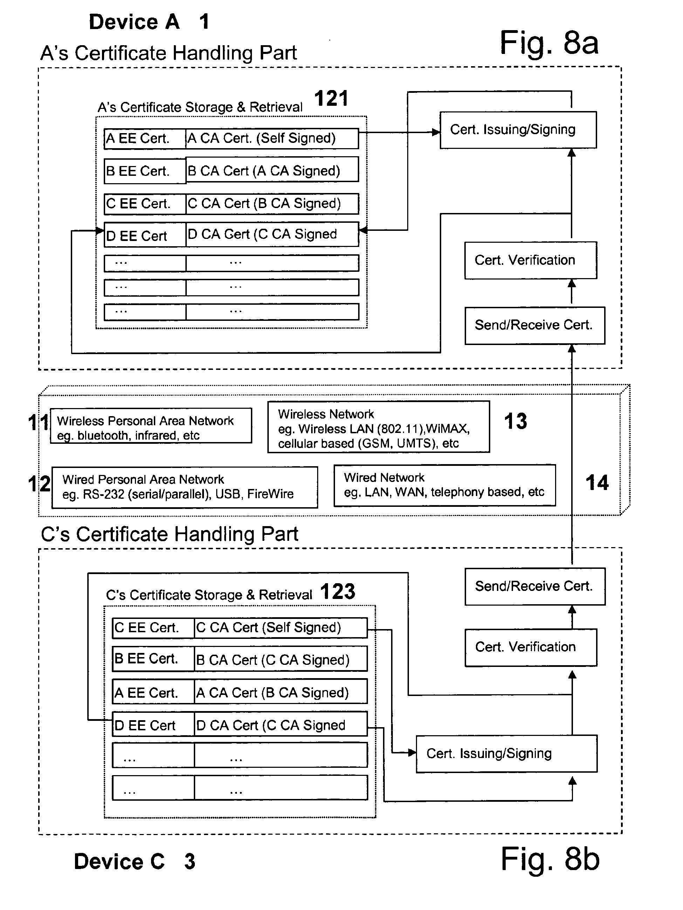

Fig. 8a and Fig. 8b illustrate in the form of a diagram, how apparatus C 3 retrieves the internally stored digital certificate of apparatus D (which was received in prior directly from apparatus D according to methods outlined in Figs. 6a and 6b) to be forwarded on to apparatus A 1. Apparatus C 3 and apparatus A 1 already have established a prior trust relationship with apparatus B 2 acting as the intermediary or trust broker. The establishment of a prior trust relationship is indicated by their mutual storage of each others EE Cert and CA Cert, while having apparatus' CA Cert signed by a mutually trusted intermediary or trust broker. C CA Cert is signed by B CA Cert, and A CA Cert signed by B CA Cert, while apparatus A has stored B CA Cert signed by A CA Cert and apparatus C has stored B CA Cert signed by C CA Cert. In this instance, any forwarding of digital certificates between apparatus A 1 and apparatus C 3, through their communication part, can safely and securely be done without concern for their physical proximity and so occur over any type of network connection 11, 12, 13, 14 (wireless or wired, personal area or otherwise).

Fig. 8b shows how the D EE Cert and D CA Cert of apparatus D is retrieved from the storage and retrieval module 123 of apparatus C 3, goes through the certificate verification module (which verifies that D EE Cert is issued by the corresponding D CA Cert, and also that D CA Cert is issued by C CA Cert). The D EE Cert and D CA Cert of apparatus D are then sent through the communication part of apparatus C 3 to be received by the communication part of apparatus A 1.

When, as illustrated in Fig. 8a, apparatus A 1 receives the D EE Cert and D CA Cert from apparatus C 3, the digital certificates are verified as belonging to apparatus D as issued or signed by apparatus C 3. Once verified, D EE Cert is stored within the storage and retrieval module 121 of apparatus A 1. D CA Cert signed by C CA Cert is also stored within the storage and retrieval module 121 of apparatus A 1.

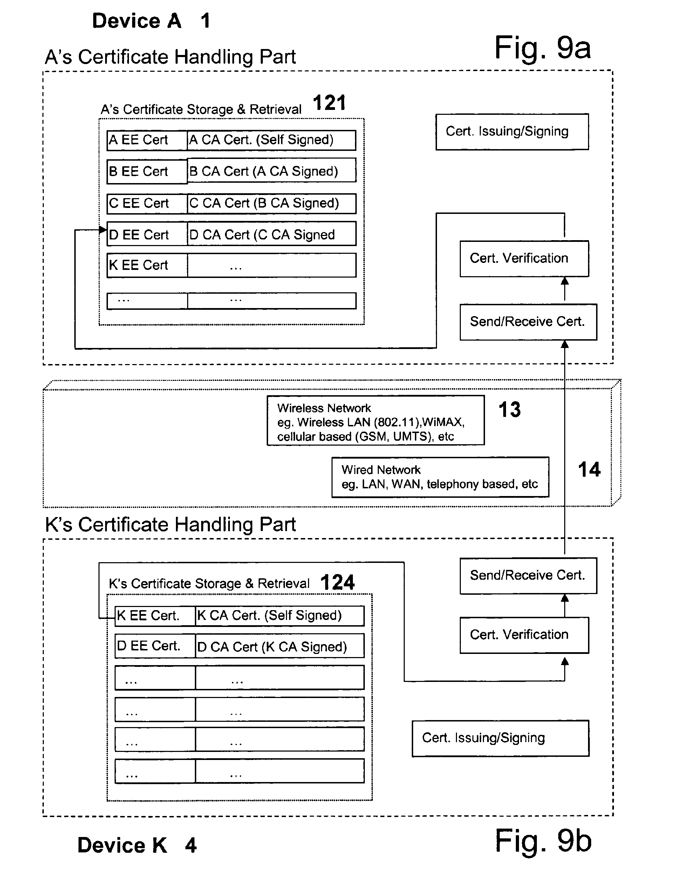

Fig. 9a and Fig. 9b illustrate in the form of a diagram the sending of apparatus K's digital certificate to apparatus A 1. While not illustrated in the diagram, a corresponding exchange could be represented as sending A's digital certificate to apparatus K 4. Apparatus A 1 and apparatus K 4 do not have any prior trust relationship established. Even though apparatus K 4 and apparatus A 1 have established prior trust relationships with apparatus D, apparatus D does not act as a trusted intermediary or trust broker. Apparatus A 1 has not received a K CA Cert (D CA Signed) to be stored in its storage and retrieval module 121. Since they do not use a mutually trusted intermediary, in this instance, any forwarding of digital certificates between apparatus A 1 and apparatus K 4, through their communication part, cannot safely or securely be done if they are not within each others' close physical proximity (which would be the case when connected over a wireless or wired personal network).

Fig. 9b shows how the K EE Cert of apparatus K 4, which is retrieved from the storage and retrieval module 124, goes through the certificate verification module (which verifies that K EE Cert is issued by the corresponding K CA Cert). The K EE Cert of apparatus K 4 is then sent through the communication part (using a wired network or wireless network connection) of apparatus K 4 to be received by the communication part (using a wired network or wireless network connection) of apparatus A 1.

When, as illustrated in Fig. 9a, apparatus A 1 receives the K EE Cert from apparatus K 4, the digital certificate cannot be verified since the issuing K CA Cert has not been received by apparatus A 1. Only the K EE Cert is subsequently stored within the storage and retrieval module of apparatus A 1. The authenticity and integrity of the K EE Cert is of an unknown nature and any usage would trigger a message of caution to be displayed for the holder of apparatus A 1.

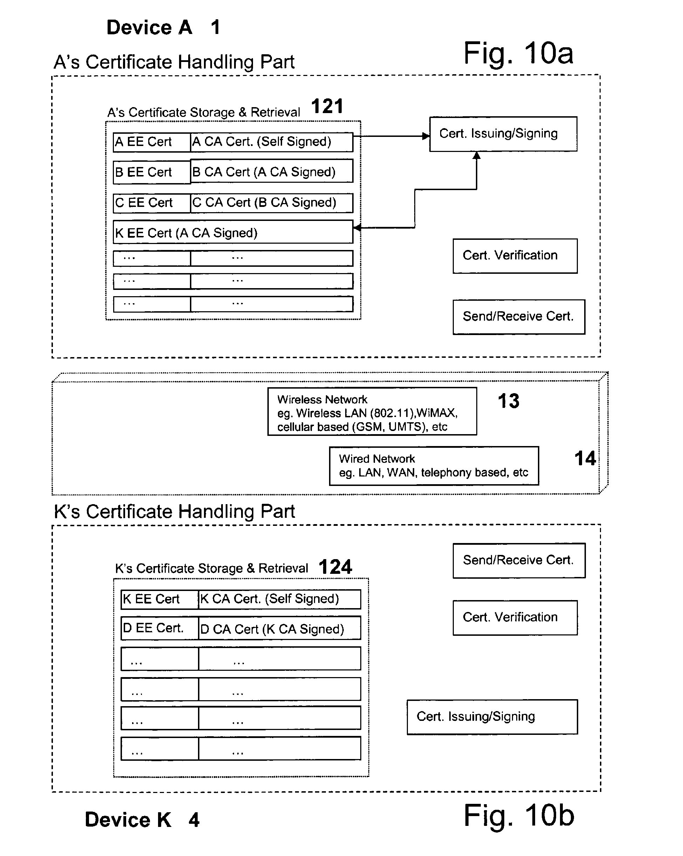

Fig. 10a illustrates in the form of a diagram the verification of the K EE Cert previously received (in Fig. 9a) from apparatus K 4. This assumes that some form or method of offline verification has been undertaken, independent of the apparatus in-built functionality. This offline verification could be done by oral (e.g. phone conversation) or written (e.g. documentation) or electronic communication, by the holder of apparatus A 1 in communication with the owner of apparatus K 4 or some other trusted intermediary. Once the holder of apparatus A 1 is satisfied with the authenticity and integrity of the K EE Cert, this can be signed by the A CA Cert as an issuer for further purposes of communication.

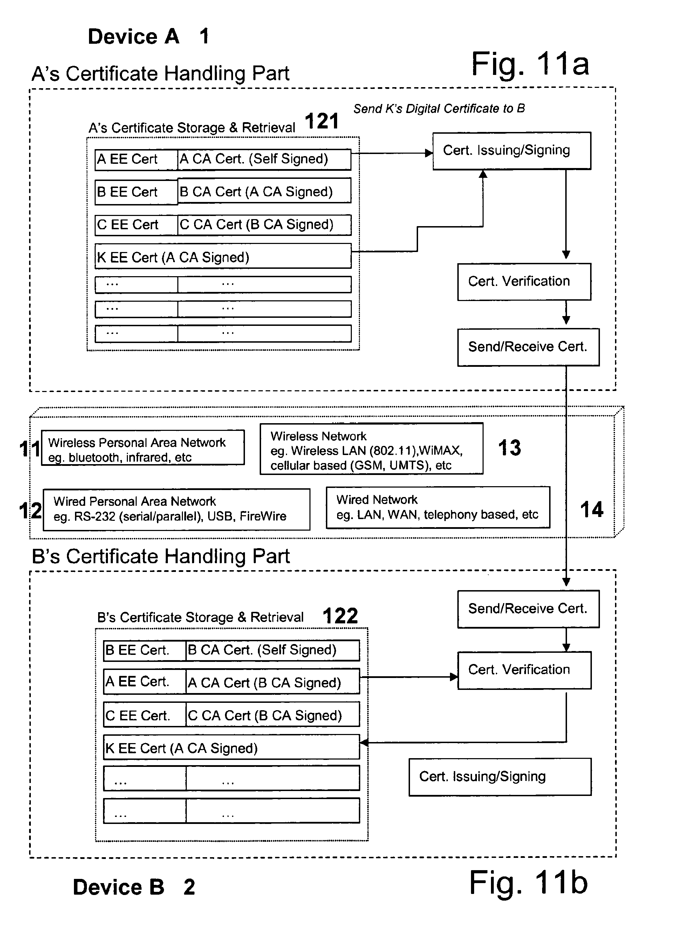

Fig. 11a and Fig. 11b illustrate in the form of a diagram, how apparatus A 1 retrieves the internally stored digital certificate of apparatus K 4 (which was received previously from apparatus K, and then verified independently by the holder of apparatus A 1 according to methods outlined in Fig. 9b, Fig. 9a and Fig. 10a) to be forwarded on to apparatus B 2. Apparatus B 2 and apparatus A 1 already have established a prior trust relationship due to their physical proximity during a previous encounter. The establishment of a prior trust relationship is indicated by their mutual storage of each others EE Cert and CA Cert, while having the trusted apparatus' CA Cert signed by the trusting apparatus' CA Cert (B CA Cert signed by A CA Cert and vice versa). In this instance, any forwarding of digital certificates between apparatus A 1 and apparatus B 2, through their communication part, can safely and securely be done without concern for their physical proximity and so occur over any type of network connection 11, 12, 13, 14 (wireless or wired, personal area or otherwise).

Fig. 11a shows how the K EE Cert of apparatus K 4 is retrieved from the storage and retrieval module of apparatus A 1, goes through the certificate verification module (which verifies that K EE Cert is issued or signed by A CA Cert). The K EE Cert of apparatus K 4 is then sent through the communication part of apparatus A 1 to be received by the communication part of apparatus B 2.

When, as illustrated in Fig. 11b, apparatus B 2 receives the K EE Cert from apparatus A 1, the digital certificate is verified as belonging to apparatus K 4 as issued or signed by apparatus A 1. Once verified, K EE Cert is stored within the storage and retrieval module 122 of apparatus B 2.

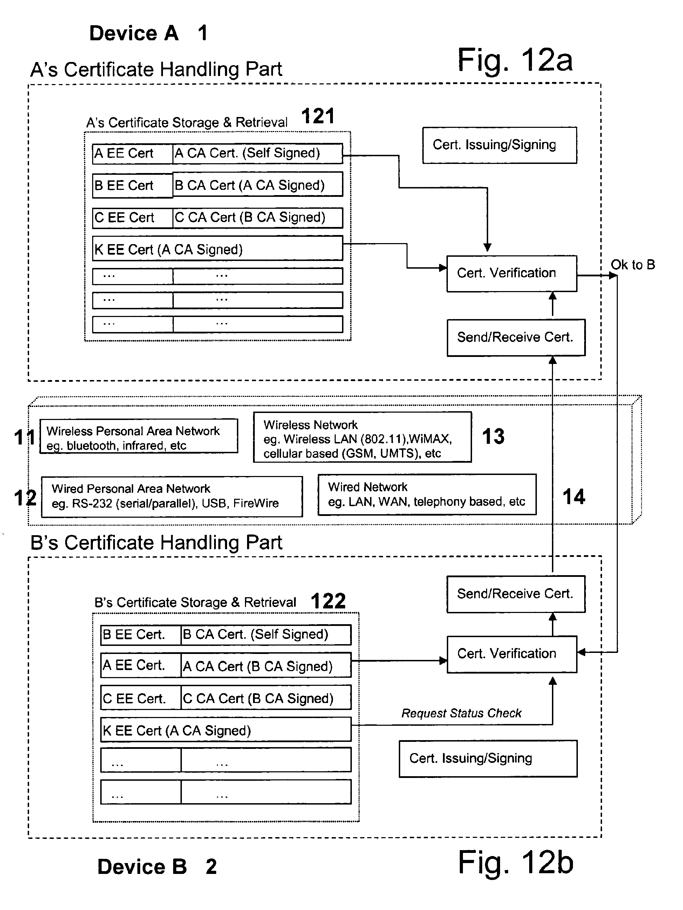

Fig. 12a and Fig. 12b illustrate in the form of a diagram, how apparatus B 2 requests a certificate status check of K EE Cert which was issued or signed by apparatus A 1. Apparatus B 2 and apparatus A 1 already have established a prior trust relationship due to their physical proximity during a previous encounter. The establishment of a prior trust relationship is indicated by their mutual storage of each others EE Cert and CA Cert, while having the trusted apparatus' CA Cert signed by the trusting apparatus' CA Cert (B CA Cert signed by A CA Cert and vice versa). In this instance, any forwarding of digital certificates or any exchange of messages between apparatus A 1 and apparatus B 2, through their communication part, can safely and securely be done without concern for their physical proximity and so occur over any type of network connection 11, 12, 13, 14 (wireless or wired, personal area or otherwise).

Fig. 12b shows how the K EE Cert of apparatus K 4 is retrieved for status check from the storage and retrieval module 122 of apparatus B 2, goes through the certificate verification module (which verifies that K EE Cert is issued or signed by A CA Cert). The K EE Cert of apparatus K 4 is then sent for status check through the communication part of apparatus B 2 to be received by the communication part of apparatus A 1.

When, as illustrated in Fig. 12a, apparatus A 1 receives the K EE Cert for status check from apparatus B 2, the digital certificate is verified as belonging to apparatus K 4 as issued by apparatus A 1. In this instance, not shown in the form of a diagram, apparatus A 1 may also send a further request for status check of K EE Cert to apparatus K 4 to gain an authoritative answer about the current status of K EE Cert from apparatus K 4. Upon receipt of a reply from apparatus K 4 about the status of K EE Cert or upon independently verifying the current status of K EE Cert, apparatus A 1 in turn sends a reply about the status of K EE Cert to apparatus B 2.

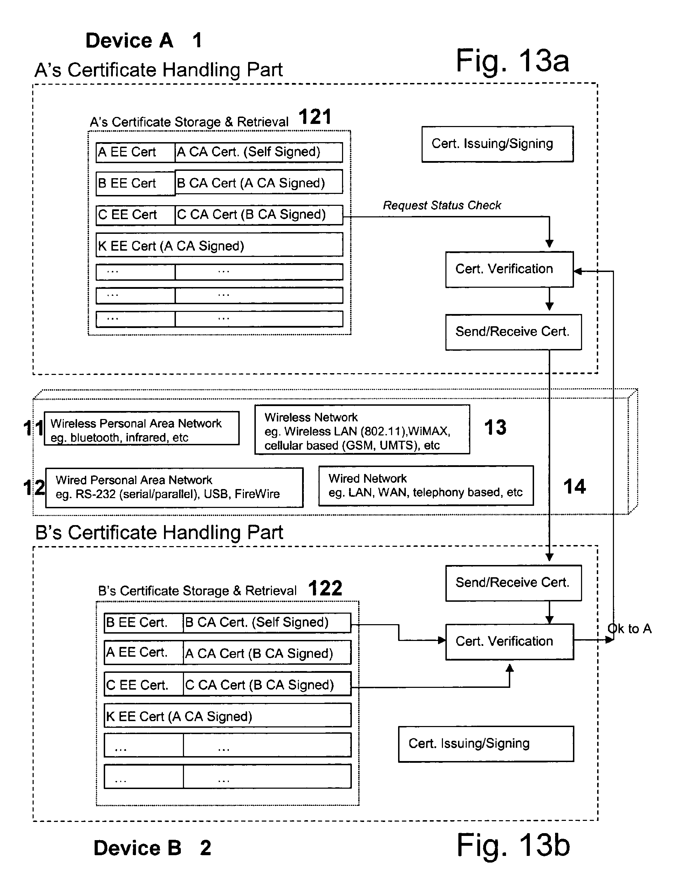

Fig. 13a and Fig. 13b illustrate in the form of a diagram, how apparatus A 1 requests a certificate status check of C EE Cert and C CA Cert which was issued or signed by apparatus B 2. Apparatus A 1 and apparatus B 2 already have established a prior trust relationship due to their physical proximity during a previous encounter. The establishment of a prior trust relationship is indicated by their mutual storage of each others EE Cert and CA Cert, while having the trusted apparatus' CA Cert signed by the trusting apparatus' CA Cert (B CA Cert signed by A CA Cert and vice versa). In this instance, any forwarding of digital certificates or any exchange of messages between apparatus A 1 and apparatus B 2, through their communication part, can safely and securely be done without concern for their physical proximity and so occur over any type of network connection 11, 12, 13, 14 (wireless or wired, personal area or otherwise).

Fig. 13a shows how the C EE Cert and C CA Cert of apparatus C 3 is retrieved for status check from the storage and retrieval module 121 of apparatus A 1, goes through the certificate verification module (which verifies that C EE Cert is issued or signed by C CA Cert which in turn was issued or signed by B CA Cert). The C EE Cert and C CA Cert of apparatus C 3 is then sent for status check through the communication part of apparatus A 1 to be received by the communication part of apparatus B 2.

When, as illustrated in Fig. 13b, apparatus B 2 receives the C EE Cert and C CA Cert for status check from apparatus A 1, the digital certificate is verified as belonging to apparatus C 3 as issued by apparatus B 2. In this instance, not shown in the form of a diagram, apparatus B 2 may also send a further request for status check of C EE Cert and C CA Cert to apparatus C 3 to gain an authoritative answer about the current status of C EE Cert and C CA Cert from apparatus C 3. Upon receipt of a reply from apparatus C 3 about the status of C EE Cert and C CA Cert or upon independently verifying the current status of C EE Cert and C CA Cert, apparatus B 2 in turn sends a reply about the status of C EE Cert and C CA Cert to apparatus A 1.

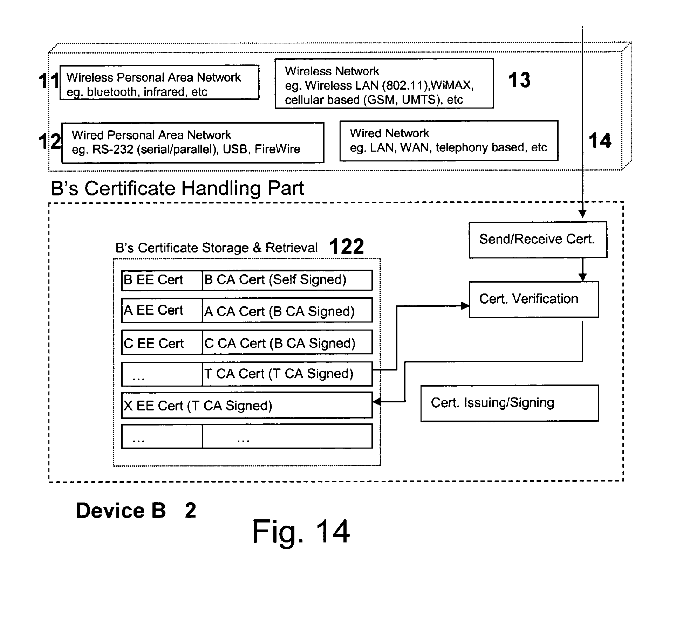

Fig. 14 illustrates an aspect of the invention which allows interoperation with current known or other methods for creating, transferring, verifying, issuing and status checking of digital certificates when an established certificate authority is needed as a trusted intermediary or broker. In this instance, the CA Cert (T CA Cert) of certain certificate authority (simply called T) is installed as a root certificate so the apparatus will recognize the T CA's signature as the issuer of any entity's digital certificate (X EE Cert) and trust the certificate.

Several embodiments of the present invention are specifically illustrated and described herein. However, it will be appreciated by those skilled in the art that modifications and variations of the present invention are covered by the above teachings and within the purview of the appended claims without departing from the spirit and intended scope of the invention.

## Claims

1. Certificate handling method for ensuring secure identification of identities of multiple electronic devices, wherein
the electronic devices can mutually authenticate each others identity without the use of a certificate authority; and wherein
the identities of a first electronic device (1) and a second electronic device (2) are mutually authenticated using a personal area network (11, 12) to establish a trust relationship between the first electronic device (1) and the second electronic device (2).

2. Certificate handling method according to claim 1, wherein the first electronic device (1), which has established trust relationships with the second electronic device (2) and with a third electronic device (3) using one or more personal area networks (11, 12), can forward information identifying the second electronic device (2) to the third electronic device (3) and information identifying the third electronic device (3) to the second electronic device (2), so that a trust relationship is established between the second electronic device (2) and the third electronic device (3) even if the second electronic device (2) and the third electronic device (3) have not directly established a trust relationship between each other before.

3. Certificate handling method according to one of the previous claims, wherein a certificate of a first electronic device (1) is signed by a second electronic device (2) and stored in a certificate storage and retrieval part (122) of the second electronic device (2) when the second electronic device (2) authenticates the identity of the first electronic device (1).

4. Certificate handling method according to one of the previous claims, wherein multiple certificates of one electronic device are stored separately in another electronic device if the certificates are signed by different electronic devices.

5. Certificate handling method according to one of the previous claims, wherein one certificate must not be signed by more than one electronic device.

6. Certificate handling method according to one of the previous claims, wherein end entity certificates and certificate authority certificates are used to authenticate electronic devices, wherein the certificate authority certificate of a first electronic device (1) is signed by the second electronic device (2) when the second electronic device (2) authenticates the identity of the first electronic device (1).

7. Certificate handling method according to one of the previous claims, wherein the certificate handling method described in one of the previous claims can be used together with conventional certificate handling methods.

8. Certificate handling method according to one of the previous claims, wherein the first electronic device (1) can authenticate the identity of a fourth electronic device (4) using an offline verification method.

9. Certificate handling method according to one of the previous claims, wherein the personal area network (11, 12) can be chosen from the groups of wireless or wired personal area networks including bluetooth, infrared, RS-232, USB, FireWire.

10. Certificate handling method according to one of the previous claims, wherein data between electronic devices having established a trust relationship can be transmitted over networks chosen from the groups of wireless or wired networks (11, 12, 13, 14) including wireless LAN, WiMAX, cellular based networks, LAN, WAN, telephony based networks, bluetooth, infrared, RS-232, USB, FireWire.

11. Certificate handling method according to one of the previous claims, wherein an electronic device can check a status of another electronic device either by directly issuing a status check request to that electronic device or issuing the status check request via other electronic devices.

12. Certificate handling system for ensuring secure identification of identities of multiple electronic devices being connected by one or more networks (11, 12, 13, 14), wherein the certificate handling method according to one of the previous claims is used.

13. Certificate handling system according to claim 12, wherein each electronic device is provided with
a communication part (10) for interfacing to a network (11, 12, 13, 14), and
a certificate handling part (100).

14. Certificate handling system according to claim 12 or 13, wherein the certificate handling part (100) of each electronic device comprises
a certificate creation part (110),
a certificate issuing/signing part (160),
a certificate storage and retrieval part (120),
a certificate verification part (140), and
a send/receive certificate part (170).
